# EUROPEAN PATENT SPECIFICATION

(11) **EP 4 604 873 B1**
(45) Date of publication and mention of the grant of the patent: **25.02.2026**
(21) Application number: 23789302.9
(22) Date of filing: 11.10.2023
(51) Int. Cl.: A61C 7/08, A61C 19/04

(54) **AN ORTHODONTIC DEVICE, A SYSTEM FOR TRACKING ORTHODONTIC TREATMENT PROGRESS AND A METHOD OF MANUFACTURING AN ORTHODONTIC DEVICE**
ORTHODONTISCHE VORRICHTUNG, SYSTEM ZUR VERFOLGUNG DES FORTSCHRITTS EINER ORTHODONTISCHEN BEHANDLUNG UND VERFAHREN ZUR HERSTELLUNG DER ORTHODONTISCHEN VORRICHTUNG
DISPOSITIF ORTHODONTIQUE, SYSTÈME DE SUIVI DE PROGRESSION DE TRAITEMENT ORTHODONTIQUE ET PROCÉDÉ DE FABRICATION DU DISPOSITIF ORTHODONTIQUE

(30) Priority: 18.10.2022 EP 22202083
(43) Date of publication of application: 27.08.2025
(73) Proprietor: Koninklijke Philips N.V., 5656 AG Eindhoven (NL)
(72) Inventor: VAN DEN DUNGEN, Wilhelmus, Andreas, Marinus, Arnoldus, Maria, 5656 AG Eindhoven (NL)
(74) Representative: Philips Intellectual Property & Standards
(86) International application number: PCT/EP2023/078139
(87) International publication number: WO 2024/083590

(56) References cited:
- US-A1- 2017 056 131
- US-A1- 2018 368 961

## Description

### FIELD OF THE INVENTION

The present invention relates to an orthodontic device for maintaining or changing the position of a user's teeth, a system for tracking orthodontic treatment progress, and a method of manufacturing the orthodontic device. In particular, the present invention relates to an orthodontic device for straightening teeth - an orthodontic "aligner".

### BACKGROUND OF THE INVENTION

Documents in the art are exemplified by US 2018/368961 A1 and US 2017/056131 A1.

Orthodontic devices include devices for maintaining or changing the position of a user's teeth. Orthodontic aligners are tightly-fitting retainers worn over the user's teeth. They are used to remedy over-crowding issues and/or spacing issues and can also be used to straighten teeth. Aligners are custom made; they are designed, based on the user's teeth, to gradually change the position of the user's teeth to a desired position. The aligners in the set are worn successively, with each aligner gradually moving the teeth closer towards the desired position.

The rate of progress of orthodontic treatment using an aligner depends on a number of factors and varies between patients. It would be desirable to provide a way to monitor orthodontic treatment in a convenient and cost-efficient way. Further, it would be desirable to monitor treatment progress accurately, and to support the detection of potential treatment problems at an early stage.

### SUMMARY OF THE INVENTION

The invention is defined by the claims.

According to examples in accordance with an aspect of the invention, there is provided an orthodontic device for changing or maintaining the position of a user's teeth, the orthodontic device comprising:
a mouthpiece body comprising:
a teeth receiving portion;
a pressure sensing arrangement comprising a pressure chamber, containing fluid, coupled to the teeth receiving portion, and a pressure sensor configured to generate an output pressure signal indicating the fluid pressure inside the pressure chamber; and
a wireless communication and power transfer arrangement comprising an antenna, the wireless communication and power transfer arrangement configured to:
   wirelessly supply power to the pressure sensor; and
   wirelessly transmit the output pressure signal from the pressure sensing arrangement.

The provision of a pressure chamber facilitates sensing of pressure changes corresponding to forces applied to the aligner, using a pressure sensor capable of being powered by wireless power transfer (i.e. a low-power pressure sensor). The pressure chamber is fluidly isolated from the teeth receiving portion. By sensing changes in pressure, it is possible to monitor treatment/track treatment progress. Changes in pressure over time can be correlated with treatment progress, lack of progress or abnormal outcomes. In particular, during an orthodontic aligner treatment, as teeth move towards the intended positions, the forces exerted on the aligner are reduced thereby reducing pressure in the pressure chamber. By measuring pressure of the fluid-containing pressure chamber, it is possible to avoid the need for complex electronic components with high energy consumption without requiring multiple sensors. It is accordingly possible to monitor treatment without providing a bulky/complex integrated power source (e.g. batteries) in the mouthpiece. This is advantageous both in terms of user safety, and in terms of providing an eco-friendly device. The fluid in the pressure chamber may be a liquid or a gas e.g. air. Preferably the fluid in the pressure chamber is air and the pressure sensor is configured to sense the air pressure in the chamber.

The pressure sensing arrangement may comprise a single pressure chamber and a pressure sensor arranged to measure a pressure associated with the pressure chamber.

The teeth receiving portion is for receiving either maxillary teeth (i.e. teeth of the upper jaw) or mandibular teeth (i.e. teeth of the lower jaw). The pressure sensing arrangement comprises a single pressure chamber, and a pressure sensor. This relatively simple arrangement facilitates treatment progress tracking, whilst also avoiding the need for a relatively complex design, thereby facilitating cost-efficient manufacture. The pressure chamber is coupled to the teeth receiving portion such that forces applied to the orthodontic device by the user's teeth, which give rise to stresses in the structure of the orthodontic aligner, are transferred to the pressure chamber, causing the pressure inside the pressure chamber to vary. The single pressure chamber may be arranged such that forces applied to the orthodontic device by the user's teeth are exerted on the pressure chamber; accordingly, the pressure chamber will be subject to a change in pressure corresponding to the forces applied to the orthodontic device as a consequence of treatment progress. In some embodiments, the orthodontic device may comprise a single pressure sensor.

The pressure sensing arrangement may comprise a first pressure chamber and a second pressure chamber, each of the first pressure chamber and the second pressure chamber being fluidly coupled to a pressure sensor housing, and at least one valve operable to fluidly couple the pressure sensor to either the first pressure chamber or the second pressure chamber.

The provision of multiple separate chambers may facilitate collection of pressure data corresponding to different regions of the mouthpiece, which may help to achieve a relatively detailed assessment of treatment progress. Each chamber may be associated with a different set of the user's teeth.

The teeth receiving portion may comprise a front section for receiving teeth at the front of a user's mouth, a first rear section for receiving teeth at a first rear side of a user's mouth and a second rear section for receiving teeth at a second rear side of a user's mouth. The pressure sensor and the antenna may both be arranged either in the first rear section or the second rear section of the teeth receiving portion.

By arranging the pressure sensor and antenna proximate a second rear section of the teeth receiving portion, the pressure sensor will - in use - be located near a user's cheek, which can enable a user to conveniently trigger the pressure sensing arrangement to make pressure measurements, for example by lifting a mobile phone to their face in a similar manner as they would when making a telephone call.

The teeth receiving portion and the pressure chamber may be formed of the same material. Accordingly, the orthodontic aligner may be convenient and cost-effective to manufacture. Where the mouthpiece body comprises multiple pressure chambers, the pressure chambers and the teeth receiving portion may be formed of the same material. The shape and strength of the teeth receiving portion and the pressure chamber(s) should be stable throughout treatment; both the teeth receiving portion and the pressure chamber are accordingly formed of a suitable material.

The pressure chamber/chambers may be formed integrally with the teeth receiving portion.

When the pressure chamber or chambers are integrally formed with the mouthpiece body, the orthodontic device can be manufactured conveniently and in a cost-effective manner. For example, the teeth-receiving portion and the pressure chamber(s) may be molded as a single piece.

The pressure sensing arrangement may further comprise a temperature sensor for monitoring temperature inside a user's mouth, wherein the pressure sensing arrangement is configured to:
obtain pressure readings from the pressure sensor;
obtain temperature readings from the temperature sensor;
adjust the pressure readings based on temperature readings, to obtain adjusted pressure readings; and
output the adjusted pressure readings and the temperature readings.

The temperature data may be used to compensate the pressure readings for variations in temperature, for improved accuracy. The inventor has realized that using the temperature readings from the temperature sensor not only to compensate the pressure readings, but also to provide an insight into the temperature in the user's mouth, provides additional information that can be used by a dental practitioner to assess treatment. Combined pressure and temperature data can be used to determine if there is a problem with treatment - for example, this information can be used to identify an abnormal reaction (e.g. excessive inflammation) or lack of treatment progress. The temperature sensor may form part of the pressure sensing arrangement.

The wireless communication and power transfer arrangement may be configured to receive power via inductive coupling. Preferably, the wireless communication and power transfer arrangement uses near field communication (NFC) technology to provide wireless communication and power transfer.

The wireless communication and power transfer arrangement may comprise a single antenna positioned at one end of the retainer, in a rear part of the teeth receiving portion. Alternatively, the wireless communication and power transfer arrangement may comprise two antennae - one proximate each end of the teeth receiving portion.

According to examples in accordance with a further aspect of the invention there is provided a system for tracking orthodontic treatment progress, the system comprising:
an orthodontic device as described above; and
a remote power device configured to:
   wirelessly transfer power to the orthodontic device, via the wireless communication and power transfer arrangement, to trigger the pressure sensor to make a pressure measurement; and
   receive the output pressure signal from the pressure sensor.

The remote power device may comprise a processor configured to:
determine a pressure data associated with a first measurement period, based on an output pressure signal corresponding to the first measurement period;
determine pressure data for a second measurement period, based on an output pressure signal corresponding to the second measurement period; and
determine a pressure gradient based on the pressure data for the first measurement period and the pressure data for the second measurement period.

Determining whether pressure is increasing or decreasing relative to previously obtained pressure data facilitates the assessment of treatment progress. When the treatment is alignment, if the teeth are becoming more aligned, the pressure gradient will be negative.

The processor may be configured to:
receive environmental data corresponding to the first measurement period and/or the second measurement period; and
adjust the pressure data based on the environmental data corresponding to the same measurement period as the pressure data.

In this way, the system can compensate for environmental factors enabling a more accurate comparison of historical and contemporaneous pressure data.

The processor may be configured to:
obtain pressure readings from the pressure sensor;
obtain temperature readings from the temperature sensor;
adjust the pressure readings based on temperature readings, to obtain adjusted pressure readings; and
output the adjusted pressure readings and the temperature readings.

The remote power device may further comprise a temperature sensor and the processor may be configured to receive temperature data from the temperature sensor and adjust the pressure data based on the temperature data. Alternatively, the pressure sensing arrangement may comprise an integrated temperature sensor, and pressure readings may be adjusted based on temperature data by the pressure sensing arrangement.

The environmental data may comprise weather data, altitude data (e.g. location data), measured air pressure data e.g. from a sensor integrated into the remote power device or predicted air pressure data based on location.

The remote device may be a smartphone comprising an integrated temperature sensor and air pressure sensor.

The remote power device may be configured to receive pressure data from the orthodontic device and to process the pressure data to obtain heart rate information.

The remote power device may be configured to initiate a read-out by transferring power to the orthodontic device via the wireless communication and power transfer arrangement and the orthodontic device is configured to, in response to receiving power via the wireless communication and power transfer arrangement, sense pressure via the pressure sensing arrangement and output a signal indicating the sensed pressure to the remote power device.

The remote power device may be a mobile telephone. The mobile telephone may be a smartphone. The smartphone may have a software application installed for receiving, storing and analyzing the pressure data to assess treatment progress. The mobile telephone may be configured communicate wirelessly with the orthodontic device. For example, the mobile telephone may comprise an NFC reader for wireless communication with the pressure sensor.

According to examples in accordance with a yet further aspect of the invention, there is provided a method of manufacturing the above-described orthodontic device, the method comprising:
generating a mold based on a representation of a user's teeth, the pressure sensing arrangement comprising a pressure chamber;
molding an orthodontic device, in which the mouthpiece body and the pressure chamber are integrated, using the mold;
coupling a pressure sensor to the pressure chamber; and
coupling a first antenna to the mouthpiece body.

The method may further comprise printing a first antenna and optionally second antenna on the mouthpiece body. Alternatively, the first and/or second antenna may be injected molded parts.

The antenna may be coupled to a rear side of the mouthpiece body, to facilitate convenient wireless charging in use (e.g. using a mobile telephone).

The pressure chambers may be custom designed for the intended user. **In** particular, the pressure inside the pressure chamber may be controlled such that, when the user first inserts the orthodontic device, the pressure inside the pressure chamber is less than the maximum pressure that the pressure sensor is capable of sensing.

The mold may be generated based on a 3D scan of the user's teeth.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1A is a perspective view of an orthodontic device according to an embodiment of the invention, showing a left-hand view of the device;
Fig. 1B is a perspective view of an orthodontic device of Fig. 1A, showing a right-hand view of the device;
Fig. 2 is a schematic diagram orthodontic device according to another embodiment of the invention;
Fig. 3 is a schematic diagram of a system according to an embodiment of the invention;
Fig. 4 illustrates the function of a processor of the system of Fig. 3, according to an embodiment of the invention;
Fig. 5 illustrates the function of a processor, according to an embodiment of the invention;
Fig. 6 illustrates a method of manufacturing an orthodontic device according to an embodiment of the invention;
Fig. 7 illustrates another method of manufacturing an orthodontic device according to an embodiment of the invention;
Fig. 8 illustrates another method of manufacturing an orthodontic device according to an embodiment of the invention;
Fig. 9 shows an example of information output by the processor, and in particular shows aligner progress over 33 days, according to some embodiments; and
Fig. 10 shows raw pressure data obtained by a pressure sensor of an orthodontic device.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides an orthodontic device for changing or maintaining the position of a user's teeth. The orthodontic device is an orthodontic aligner, and comprises a mouthpiece body including a teeth receiving portion, a pressure sensing arrangement and a wireless communication and power transfer arrangement coupled to the pressure sensing arrangement to wirelessly supply power to the pressure sensing arrangement. The pressure sensing arrangement comprises a pressure chamber, containing fluid (e.g. air), coupled to the teeth receiving portion. A pressure sensor is arranged inside the pressure chamber configured to generate an output pressure signal indicating the pressure inside the pressure chamber. The wireless communication and power transfer arrangement comprises an antenna, and is configured to supply power to the pressure sensor. The wireless communication and power transfer arrangement is further configured to communicate readings output by the pressure sensor to an external device.

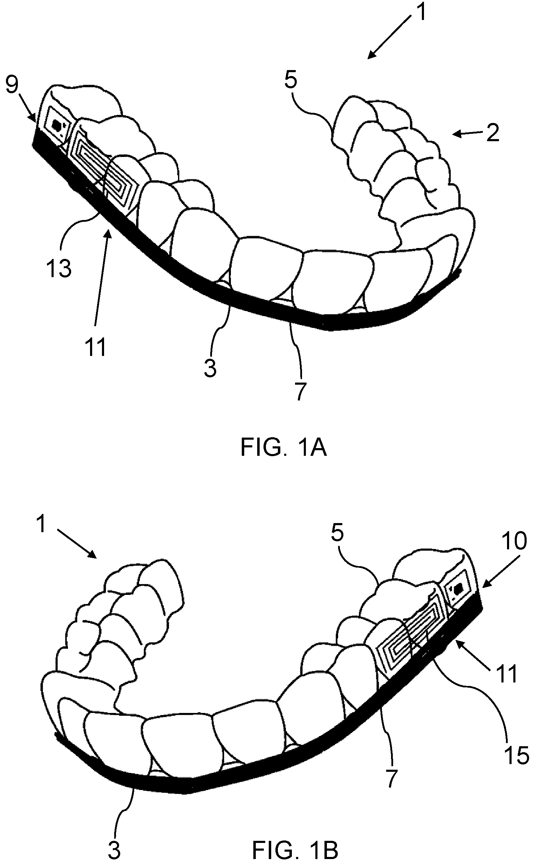

Fig. 1A illustrates an orthodontic device 1 according to an embodiment of the invention, and shows the left side perspective view of the orthodontic device 1. Fig. 1B illustrates the orthodontic device of Fig. 1A but shows a right side view. The orthodontic device 1 is an aligner comprising a mouthpiece 2 having a base 3 and a teeth receiving portion 5 into which a user inserts their teeth when donning the orthodontic device 1. The teeth receiving portion 5 has two rear sections for receiving teeth towards the back of a user's mouth (e.g. wisdom teeth, molars) and a central section, between the two rear sections, for receiving teeth towards the front of the user's mouth (e.g. incisors).

A pressure chamber 7 is integrated into the base 3 and arranged on the front side of the aligner; the pressure chamber 7 extends along the teeth receiving portion 5. The pressure chamber 7 is an enclosure, which is integrally formed with the teeth receiving portion 5, and which contains a pressurized fluid (e.g. air). A first pressure sensor 9 for sensing pressure in the pressure chamber 7 is arranged in a first pressure sensor housing (not shown) that is fluidly coupled to the pressure chamber enclosure. The first pressure sensor 9 is arranged proximate left hand side rear section of the teeth receiving portion. A second pressure sensor 10 for sensing pressure in the pressure chamber 7 is arranged in a second pressure sensor housing fluidly coupled to the enclosure, and is arranged proximate the right hand side rear section of the tooth receiving portion. When the fluid inside the pressure chambers is air, the pressure sensors are air pressure sensors. If the fluid inside the pressure chambers is a liquid, a suitable pressure sensor may be provided. The pressure sensors 9, 10 may be, for example, barometric pressure sensors. The barometric pressure sensors may, for example, have a resolution of +/- 0.01hPa.

The pressure chamber 7 is mechanically coupled to the teeth receiving portion 5 such that when, in use, the user's teeth exert force on the mouthpiece via the teeth receiving portion 5, the stress in the structure of the mouthpiece is transferred to the pressure chamber 7 thereby deforming the pressure chamber 7 and altering the pressure inside the pressure chamber 7. By monitoring the pressure in the pressure chamber 7, using the first pressure sensor 9, it is possible to monitor how forces exerted on the aligner change over time. This can assist a dental practitioner in monitoring and evaluating orthodontic treatment progress.

A wireless communication and power transfer arrangement 11, comprising a first antenna 13 and a second antenna 15, is electronically coupled to the first pressure sensor 9, to supply power to the first pressure sensor 9. The first antenna 13 is arranged proximate the first pressure sensor 9, on the left hand rear side of the teeth receiving portion 5. The second antenna 15 is arranged proximate the second pressure sensor 10, on the right hand rear side of the teeth receiving portion.

The inventor has realized that by integrating a pressure sensor 9, 10 connected to a pressure chamber into the orthodontic device, the orthodontic device can facilitate treatment progress monitoring in a convenient and cost-efficient way.

In particular, because the pressure sensor is arranged to sense the pressure associated with the pressure chamber, which contains pressurized fluid, it is possible to use a low-power pressure sensor to detect forces applied to the orthodontic device with sufficient accuracy to monitor orthodontic treatment progress. Even small pressure changes associated with a pressurized environment can be detected by low power pressure sensors. Deformation of the pressure chamber causes the pressure sensor to detect a relatively large pressure change. The inventor has realized that this effect can be harnessed to monitor orthodontic treatment in a convenient and accurate way. By providing a pressure chamber as part of the aligner structure and sensing pressure in the pressure chamber, it is possible to track treatment progress by tracking pressure over time.

Further, the amount of deformation of the pressure chamber needed to give rise to a measurable change in the pressure reading is much smaller than the pressure exerted on the aligner as a result of the treatment. Accordingly, the pressure chamber 7 can be made of the same material as the teeth receiving portion, and does not affect treatment. For example, treatment may induce teeth movement (and therefore aligner deformation) in the range of 0.1 mm to 0.5 mm whereas deformation of as little as 100 nm can give rise to a detectable pressure change.

Furthermore, the inventor has realized that using a low-power pressure sensor in a pressure chamber not only achieves sufficiently accurate measurements for monitoring orthodontic treatment, but also conveniently facilitates the use of wireless power supply. That is, because the measurement is made with a low-power pressure sensor, and progress in orthodontic treatment is typically slow (treatments typically take place over weeks, or months), orthodontic treatment can be monitored using an aligner in which the pressure sensor is powered wirelessly. In particular, because treatment progress is slow, treatment can be monitored by taking point measurements on a regular basis (e.g. once per day, or once per week). The low power requirement of the pressure sensor for the required measurements mean that appropriate measurements can be obtained while powering the pressure sensor with a small, integrated coil/antenna. Accordingly, there is no need to incorporate batteries into the aligner (which could potentially compromise user safety).

The pressure sensor may be powered by a smartphone, using NFC technology. The power a typical smartphone can produce is low. However, the pressure sensor only needs to use micro watts (uW) of power for a very limited time. For example, the pressure sensor may use 1.65 V with currents varying between 1 and 660 uA and a power on time of 3 ms, with a maximum measurement time of 78 ms. Because treatment progress is slow, few measurements are only required. Treatment could be monitored by conducting a pressure readout, initiated and powered by a smartphone, via NFC, multiple times per day, once a day or even weekly.

In the embodiment illustrated in Fig. 1, the wireless communication and power transfer arrangement comprises two antenna. The first antenna 13 and the second antenna 15 are arranged at respective rear sections of the teeth receiving portion 5. Likewise, the first pressure sensor 9 and the second pressure sensor 10 are arranged proximate respective rear sections of the teeth receiving portion 5. The positioning of the first antenna 13 and the second antenna 15 may facilitate convenient wireless power transfer. For example, it may be convenient to use a smartphone to transfer power to the pressure sensor 9, 10 since users typically hold their smartphones next to their cheek (and therefore proximate the rear sections of the teeth receiving portion, where the antenna are situated) when making/receiving telephone calls. By providing a pressure sensor and corresponding antenna on each side of the orthodontic device, pressure measurements can be triggered by either side. This may be particularly convenient when a smartphone is used to supply power to the orthodontic device.

Alternatively, because aligners are custom-made, the user may select a side for the pressure sensor and antenna to be positioned. In such an embodiment, where only a single pressure sensor and antenna are provided, the orthodontic device is relatively inexpensive because fewer electronic components are required.

In Fig. 1, the orthodontic device comprises a single pressure chamber. The inventor has realized that it is possible to monitor orthodontic treatment progress without measuring the pressure associated with individual teeth. The pressure exerted on the aligner by teeth treated by the aligner result in stresses in the body of the aligner. The stresses in different regions of the aligner are exerted on the pressure chamber, so that the pressure inside the pressure chamber is indicative of the combined stresses. Accordingly, it is not necessary to monitor pressure associated with each tooth individually in order to assess treatment progress.

The orthodontic device 1 further comprises a temperature sensor for sensing the temperature of the local environment (e.g. inside a user's mouth, when in use). The temperature sensor may be arranged such that, is use, it is proximate or in contact with the user's teeth and/or gums. The temperature sensor is configured to generate output temperature data, which can be monitored to gain further insight into treatment progress and/or potential treatment problems. For example, where the output pressure data indicates that treatment progress is abnormal, the temperature data can be used to support a dental practitioner in identifying potential treatment problems (e.g. a temperature increase of • 1 °C may indicate that inflammation in the mouth is hindering treatment).

In some embodiments, the temperature sensor is part of the pressure sensing arrangement. That is, the pressure sensing arrangement is configured to output synchronized pressure and temperature data. The temperature data may be used to adjust the pressure measurements, in order to improve accuracy. The same temperature data can be monitored to gain further insight into treatment progress and/or potential treatment problems.

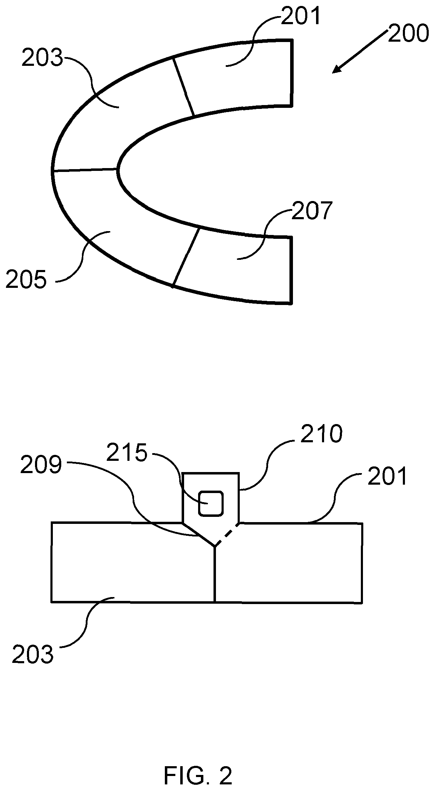

Fig. 2 illustrates another embodiment of an orthodontic device. In the embodiment of Fig. 2, the orthodontic device 200 comprises multiple separate pressure chambers: a first pressure chamber 201, a second pressure chamber 203, a third pressure chamber 205 and a fourth pressure chamber 207 which are fluidly isolated from one another. By providing multiple pressure chambers, it is possible to monitor pressure corresponding to different regions of the user's mouth. **In** some embodiments comprising multiple pressure chambers, each pressure chamber has a respective pressure sensor. Alternatively, as illustrated in Fig. 2, a single pressure sensor may be used to monitor the pressure of multiple different pressure chambers. The first and second pressure chambers 201, 203 are each coupled to a first pressure sensor housing 210, which houses a first pressure sensor 215, by a valve 209. The valve 209 is movable between two configurations; in the first configuration (as shown in Fig. 2) the valve is configured to fluidly isolate the second pressure chamber 203 from the first pressure sensor housing 210, and to permit fluid communication between the first pressure chamber 201 and the first pressure sensor housing 210 so as to allow the pressure chamber to sense the pressure associated with the first pressure chamber. In the second configuration (illustrated by the dashed line), the valve is configured to fluidly isolate the first pressure chamber 201 from the first pressure sensor housing 210, and to permit fluid communication between the second pressure chamber 203 and the first pressure sensor housing 210 so as to allow the pressure chamber to sense the pressure associated with the second pressure chamber. **In** both valve configurations, the first pressure chamber 201 and the second pressure chamber 203 are fluidly isolated from one another.

The third pressure chamber 205 and the fourth pressure chamber 207 may be coupled to a second pressure sensor housing (not shown), using a respective valve arrangement, in the same way. Alternatively, the third pressure chamber 205 and the fourth pressure chamber 207 may also be coupled to the first pressure sensor housing, by a valve arrangement. **In** that case, the valve arrangement is operable to allow each of the four pressure chambers to be individually fluidly connected to the first pressure sensor housing. That is, the valve arrangement is operable to allow each pressure chamber to be fluidly connected to the first pressure sensor housing while the other three pressure chambers are fluidly isolated from the first pressure sensor housing.

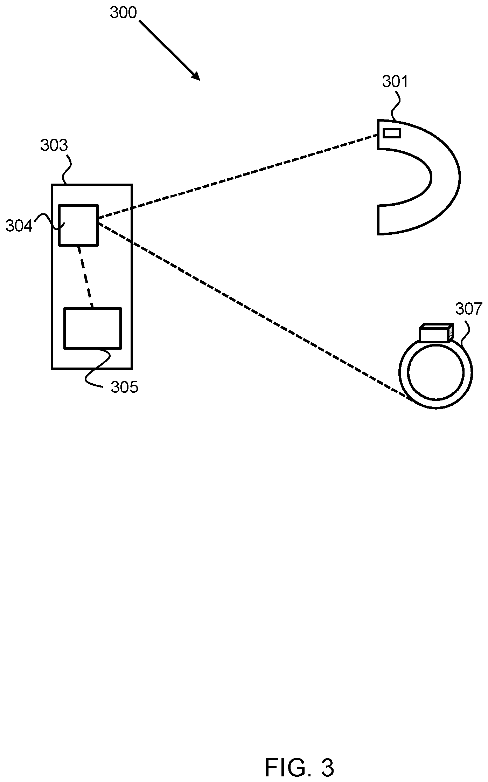

Fig. 3 illustrates a system 300 for monitoring an orthodontic treatment, according to an embodiment of the invention. The system comprises an orthodontic device 301 and a remote power device 303. The remote power device comprises a wireless communication and power transfer means, a display and a processor.

In some embodiments, the remote power device 303 is a smartphone. The smartphone may have a software application installed for receiving, storing and analyzing pressure data from the orthodontic device 301. Accordingly, a user can monitor orthodontic treatment progress using the smartphone 303.

The smartphone 303 is configured to supply power, wirelessly, to the orthodontic device 301 using NFC technology. The smartphone 303 is also configured to communicate with the orthodontic device, wirelessly, using NFC technology. Accordingly, the smartphone 303 comprises an NFC unit 304 configured to supply power to the orthodontic device 301 and to receive information (e.g. pressure data) from the orthodontic device 301. The smartphone 303 further comprises a processor 305 configured to process information received from the orthodontic device.

In use, a user brings the smartphone into range of the orthodontic device 301 - that is the user brings the smartphone close to the device's antenna - for example, by holding the smartphone to their cheek, whilst the user is wearing the orthodontic device. Bringing the smartphone 303 into range triggers the smartphone to initiate wireless power transfer. Accordingly, the smartphone 303 transfers power, wirelessly, to the pressure sensing arrangement via the antenna of the wireless communication and power transfer arrangement.

This causes the pressure sensor to carry out a pressure measurement and to generate an output pressure signal indicating the fluid pressure (e.g. air pressure) inside the pressure chamber. The smartphone 303 receives the output pressure signal from the orthodontic device 301 and stores the pressure data (e.g. in local storage, or in the cloud). By repeating this process (e.g. daily, weekly), the user obtains temporal pressure data, which can be analyzed to assess orthodontic treatment progress.

The system may further comprise an Electrocardiogram (ECG) sensor. The processor may be configured to receive data from the ECG sensor, and synchronize the ECG data with the aligner pressure data. For example, the system 300 may further comprise a personal device 307 comprising an ECG sensor. For example, the personal device may be a wearable device, such as a smartwatch, configured to communicate ECG data to the smartphone 303. The ECG data from the wearable device and the pressure data from the aligner may be combined to determine Pulse Transit Time-Estimated Blood Pressure (e.g. based on timing differences between the heart beat represented in the pressure data and heart beat measured from the ECG data).

Temporal pressure data obtained from the aligner can be used to assess treatment progress and to identify potential treatment problems. At the beginning of treatment using an orthodontic device, the device exerts a relatively large force to straighten the teeth. When this force is no longer present, it can be assumed that the aligner is no longer effectively straightening the teeth. This may indicate that it is time to replace the aligner. Additionally, in a normal treatment, pressure exerted on the aligner by the user's teeth should decrease gradually over time. If the pressure data does not decrease gradually over time, this may indicate that there are problems with the treatment (e.g. problems with user compliance). The pressure data can be used in combination with other physiological data (e.g. oral temperature, blood pressure, heart rate) to assist a dental practitioner in assessing orthodontic treatment progress.

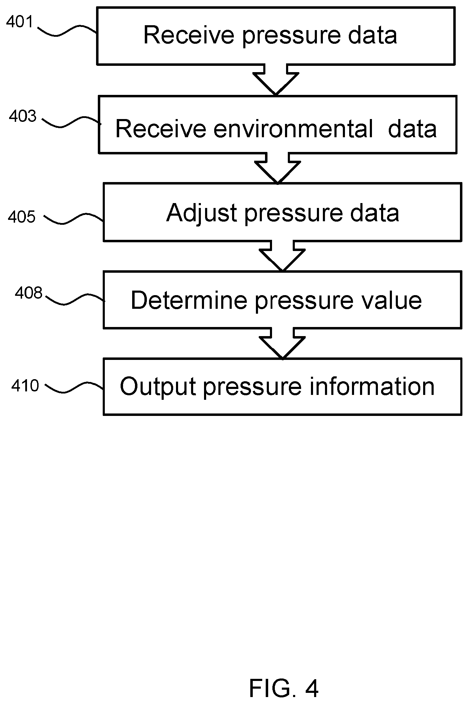

Fig. 4 illustrates steps of a method that the processor 305 of Fig. 3 is configured to perform, according to some embodiments. As illustrated in Fig. 4, the processor 305 may be configured to receive pressure data, 401, from the pressure sensing arrangement over a first measurement period. The processor receives, 403, environmental data corresponding to the first measurement period and adjusts, 405, the pressure data based on the environmental data. Based on the adjusted pressure data, the processor determines 408, a pressure value associated with the first measurement period. Temporal pressure information relating to pressure is then output, 410, by the processor.

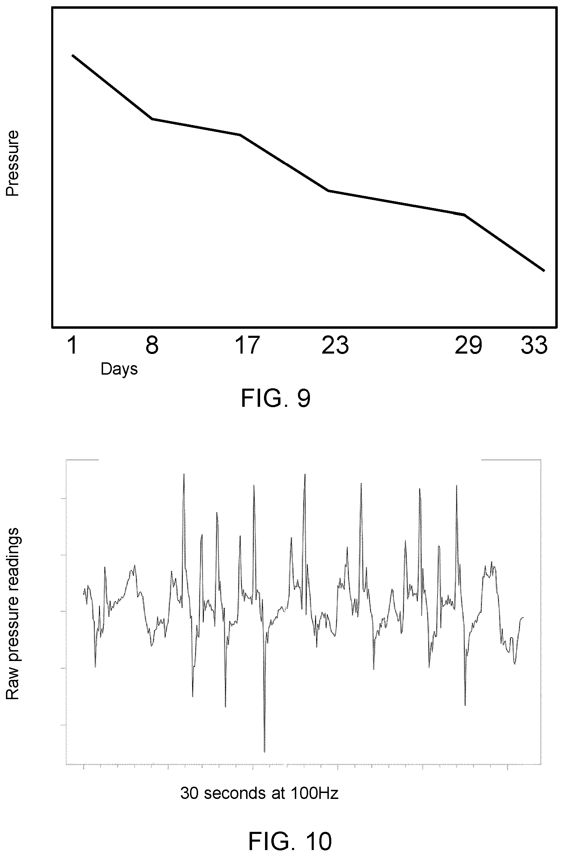

The information output by the processor may comprise information representing the pressure value associated with the first measurement period. For example, the processor may output a graph representing temporal pressure value information (each point measurement corresponding to a different measurement period). Fig. 9 illustrates an example of a graph showing temporal pressure value information.

Alternatively, the processor may be configured to determine, 408, and output, 410, a temporal pressure gradient based on the pressure value associated with the first measurement period and a previously obtained pressure value associated with a different measurement period. In this case, the processor calculates the pressure gradient based on a pressure value obtained from pressure data obtained over a second measurement period, earlier than the first measurement period, and the pressure value associated with the first measurement period.

The temporal pressure information may indicate the change in pressure over a period of days/weeks and can be used to assess whether the pressure is stable, increasing or decreasing over time. The temporal pressure information may assist a dental practitioner in assessing treatment progress. The processor may output the information representing pressure gradient to a display (e.g. a display integrated in the remote power device).

As discussed above, is some embodiments the processor is configured to receive temporal environmental data, 403, corresponding to the same time period(s) as the pressure data. In a compensation step, 405, the processor adjusts the pressure data based on the environmental data in order to compensate for environmental factors capable of influencing the pressure measurement made by the orthodontic device's pressure sensor.

For example, in some embodiments, the orthodontic device may comprise a temperature sensor configured to sense local temperature (e.g. the temperature inside the user's mouth, during use). Accordingly, the environmental data may comprise temperature data output by a temperature sensor forming part of the pressure sensing arrangement.

It may alternatively/additionally be desirable to compensate the pressure data to take into account other environmental factors such as changes in air pressure due to disturbances. For example, the processor may be configured to filter out contributions from external environmental sources (e.g. closing doors, elevators, wind). Environmental compensation can also be carried out to account for the influence of weather or altitude on pressure measurements. The processor may therefore be configured to compensate the pressure data to account for weather conditions/altitude. Where the pressure data is compensated based on air pressure changes from weather or altitude, the environmental data may comprise location data, local weather information, air pressure data.

The system may further comprise a venting reference sensor (e.g. an air pressure sensor included in a smartphone) configured to generate reference data indicative of the environmental air pressure at the time of measurement.

Further, the processor may be configured to determine heart rate and/or breathing rate based on the output pressure data. Because the orthodontic device is worn inside a user's mouth, close to the user's gums, it is also positioned close to the user's blood vessels. Accordingly, changes blood pressure associated with the heart's rhythm can be detected by the pressure sensor. Pressure data obtained by the pressure sensor can be analysed to extract a user's heart rate.

The pressure change associated with blood pumping through a user's blood vessels, according to the user's heart rate, are relatively small compared with the pressure exerted on the orthodontic device by the teeth, in the course of orthodontic treatment. However, providing the pressure readings are made with a sufficiently high frequency (e.g. at least 15 Hz) and over a sufficiently long time period (e.g. 30s) it is possible to detect a user's heart rate. The pumping of blood through blood vessels in a user's mouth will appear as small, repeating variations in the measured pressure of the pressure chamber. The pressure data output by the pressure sensor can be used to obtain heart rate information, which can be provided to the user/a dental practitioner. Accordingly, the processor may be configured to receive pressure data from the pressure sensor, analyse the pressure data to extract heart rate information, and output the heart rate information.

Fig. 10 shows raw pressure data, obtained over a 30 second measurement period, at a sample rate of 100 Hz. This data can be used to detect a user's heart rate: the data includes clear peaks corresponding to a heartbeat. In some embodiments, the processor 305 is configured to receive the raw pressure data, and execute an algorithm for extracting user heart rate from the data.

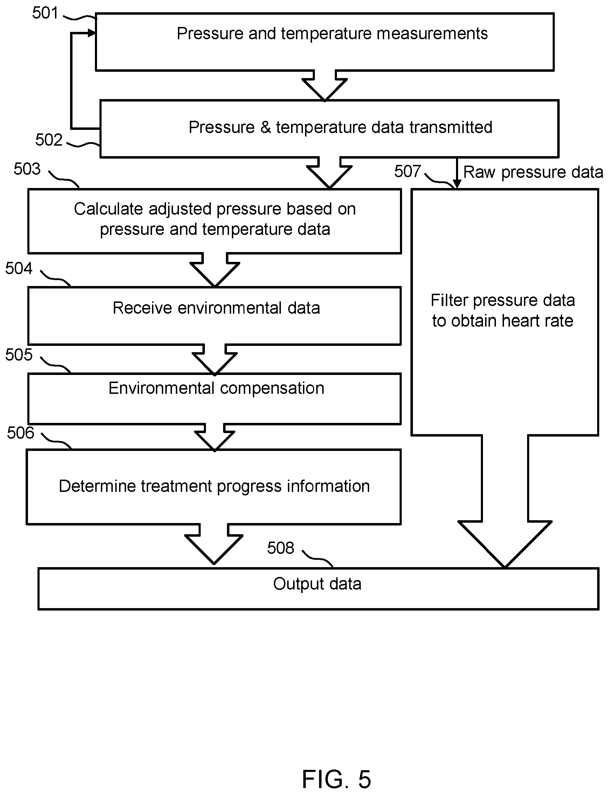

Fig. 5 illustrates a method of using an orthodontic device according to an embodiment of the invention, including steps illustrating the function of the processor (e.g. the processor 305 of Fig. 3) according to one or more embodiments of the invention.

A pressure measurement is triggered when the remote device is brought into range of the wireless communication and power transfer arrangement. Wireless power transfer, from the remote device to the orthodontic device's pressure sensor and temperature sensor, causes the pressure sensor to carry out pressure measurements and temperature measurements.

Pressure and temperature are monitored, 501, over a measurement time interval - for example 30 seconds, at a frequency of e.g. 100 Hz.

The raw pressure data and raw temperature data are transmitted, 502, to the processor, which is configured to adjust the raw pressure data based on the corresponding temperature data.

The processor calculates, 503, adjusted pressure data based on the raw pressure data and temperature data. Further, the processor receives, 504, environmental compensation data and further adjusts, 505, the pressure data to compensate for environmental fluctuations (e.g. weather variations).

Based on the adjusted pressure data, the processor determines, 506, treatment progress information e.g. a pressure gradient determined over a time period indicative of treatment progress.

Further, the processor determines, 507, heart rate information, based on raw pressure data obtained over the measurement period. For example, based on 30 seconds of pressure samples (measured at 100Hz) the processor filters the raw pressure data, to obtain a frequency associated with the user's heart rate.

The processor outputs, 508, data for assisting a dental practitioner in assessing treatment progress. For example, the processor may output: raw pressure and temperature readings, pressure gradient over treatment time, temperature of pressure chamber during measurements and/or heart rate information.

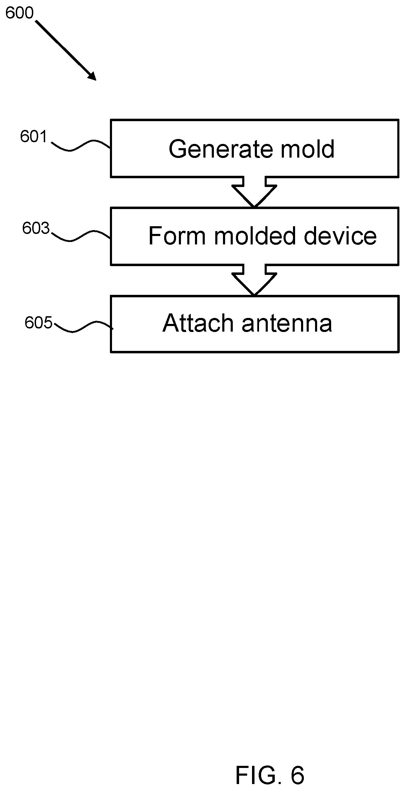

Fig. 6 illustrates a method 600 of manufacturing an orthodontic device. The orthodontic device is custom fit to the user. Accordingly, in order to manufacture the device, it is first necessary to obtain information about the user's teeth (e.g. a 3D scan). A mold for the orthodontic device is then generated, 601, based on the 3D scan, the mold comprising a mold portion corresponding to the orthodontic device's mouthpiece body (including a teeth receiving portion) and a mold portion corresponding to the orthodontic device's pressure chamber. In a molding step, 602, the orthodontic device - including a teeth receiving portion and a pressure chamber coupled to the teeth receiving portion - is produced. The inventor has realized that it is possible to incorporate a pressure chamber(s) using the same molding techniques typically used to manufacture molded orthodontic aligners. There is accordingly no requirement to use special technologies. A pressure sensor is arranged to sense the pressure of the pressure chamber. Further, a first antenna, for receiving power wirelessly, is coupled 603 to the mouthpiece body. Preferably, the first antenna is coupled to a rear portion of the teeth receiving portion, such that - in use - the first antenna is situated at the rear of a user's mouth, close to the user's cheek.

With this method, the mouthpiece body and the pressure chamber may be integrally molded using the same material. This can help to ensure the device is cost-effective and convenient to manufacture. The mouthpiece body and the pressure chamber should be formed of a material that does not deform over the course of treatment, in order to ensure it provides effective treatment.

The pressure in the pressure chambers may be customized, to ensure that during use, the pressure in the chamber is in the measurable range of the pressure sensor during treatment . In particular, the pressure inside the pressure chamber may be controlled such that, when the user inserts the orthodontic device, the pressure inside the pressure chamber is less than the maximum pressure that the pressure sensor is capable of sensing and above the minimum pressure that the pressure sensor is capable of sensing.

In general, the first antenna may be formed by overmolding, laser printing or any alternative means of forming an antenna. The antenna may be attached to the mouthpiece body in a separate step.

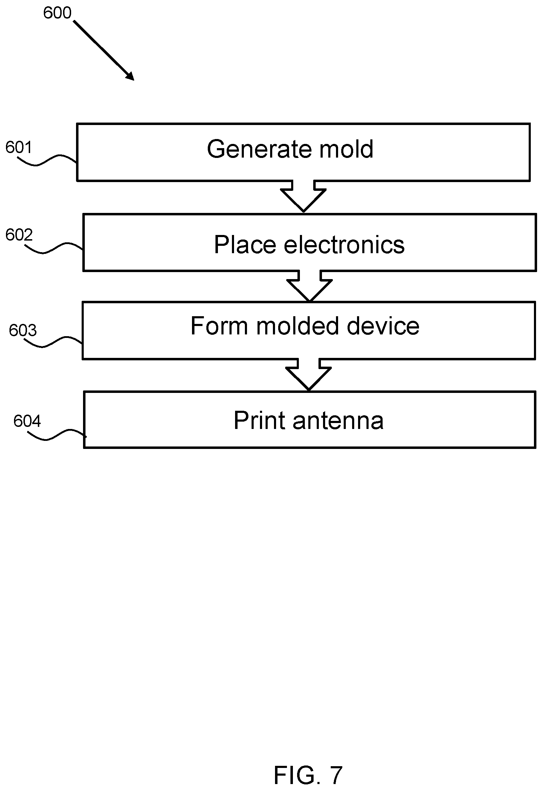

Fig. 7 shows another method 700 of manufacturing an orthodontic device. The method 700 comprises generating 701 an orthodontic device mold, which is custom designed for the user. Once the orthodontic device mold has been generated, device electronics, including the pressure sensor, are placed 702 in the mold. In a molding step, 703, a molded mouthpiece body is formed. In a further step, the first antenna is formed by printing, 704, a coil onto the molded mouthpiece body.

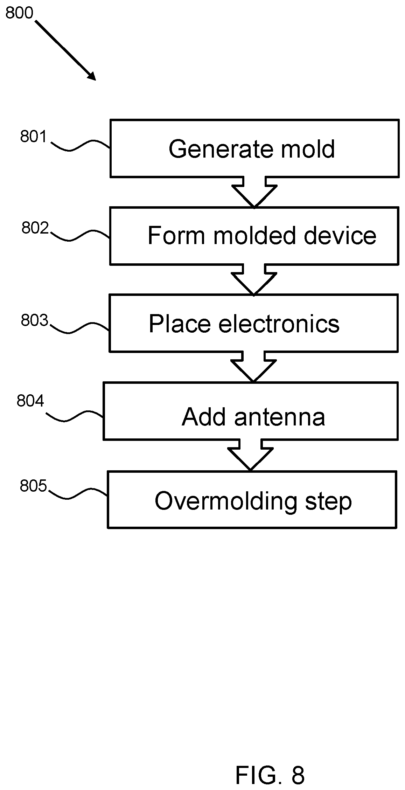

Fig. 8 illustrates another method of forming an orthodontic device, in which the antenna is overmolded. The method 800 comprises generating 801 an orthodontic device mold, which is custom designed for the user. In an initial molding step, 802, a molded mouthpiece body is formed. Device electronics, including the pressure sensor are placed 803 inside the molded mouthpiece body. The antenna is then added, 804, either by printing an antenna on the mouthpiece body, or positioning the antenna in an appropriate location on the mouthpiece body. In a subsequent overmolding step, 804, the aligner and device electronics are molded to the mouthpiece body.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

In particular, the wireless communication and power transfer arrangement may be configured to transfer power by alternative means to NFC. For example, RF wireless power transfer or other methods of inductive power transfer (e.g. Qi).

The orthodontic device may comprise a single pressure sensor and a single antenna, or it may comprise multiple pressure sensors and multiple antennae. Where the orthodontic device comprises a single pressure sensor and a single antenna, they may be arranged on either the right-hand side or the left-hand side of the orthodontic device (e.g. in just one of the two locations illustrated in Fig. 1A and Fig. 1B).

The pressure chamber/s may be positioned anywhere on the orthodontic device, as long as it/they is/are mechanically coupled to the teeth receiving portion in such a way that stresses in the structure of the orthodontic device resulting from the forces exerted by the user's teeth on the device are transferred to the pressure chamber(s). In particular, the pressure chamber is not necessarily arranged on the front side of the aligner. It may instead be arranged on the rear side, or at the tip of the teeth receiving portion, or inside the open part of the aligner for receiving the user's teeth.

The pressure chamber may be directly connected to the teeth receiving portion, or indirectly connected to the teeth receiving portion.

The orthodontic device may comprise a single antenna, or multiple antennae.

The orthodontic device may comprise a single pressure chamber of multiple separate pressure chambers. Fig. 2 shows an aligner comprising multiple pressure chambers. In Fig. 2, four pressure chambers are illustrated. However, it will be appreciated that a different number of pressure chambers may be provided. That is, the aligner may comprise two or more pressure chambers.

The pressure chamber and the teeth receiving portion may be of the same material or of different materials.

The remote power device comprises a wireless communication and power transfer means. It may optionally also include a display and a processor. The remote power device is not necessarily a smart phone. Instead, it may be a personal computing device, such as a wearable person computing device.

It will be appreciated that the orthodontic device can be manufactured by alternative methods to the above-described method.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. An orthodontic device **(1)** for changing or maintaining the position of a user's teeth, the orthodontic device comprising:
a mouthpiece body (2) comprising:
a teeth receiving portion (5);
a pressure sensing arrangement comprising a pressure chamber (7) containing fluid, coupled to the teeth receiving portion, and a pressure sensor (9) configured to generate an output pressure signal indicating the fluid pressure inside the pressure chamber; and
a wireless communication and power transfer arrangement (11) comprising an antenna (13), the wireless communication and power transfer arrangement configured to:
wirelessly supply power to the pressure sensor; and
wirelessly transmit the output pressure signal from the pressure sensing arrangement.

2. The orthodontic device of claim 1, wherein the pressure sensing arrangement comprises a single pressure chamber and a pressure sensor arranged to measure a pressure associated with the pressure chamber.

3. The orthodontic device of claim 1 wherein the pressure sensing arrangement comprises a first pressure chamber and a second pressure chamber, each of the first pressure chamber and the second pressure chamber being fluidly coupled to a pressure sensor housing, and at least one valve operable to fluidly couple the pressure sensor to either the first pressure chamber or the second pressure chamber.

4. The orthodontic device of any preceding claim, wherein the teeth receiving portion comprises a front section for receiving teeth at the front of a user's mouth, a first rear section for receiving teeth at a first rear side of a user's mouth and a second rear section for receiving teeth at a second rear side of a user's mouth, and wherein the pressure sensor and the antenna are both arranged either in the first rear section or the second rear section of the teeth receiving portion.

5. The orthodontic device of any preceding claim wherein the teeth receiving portion and the pressure chamber are formed of the same material.

6. The orthodontic device of any preceding claim wherein the pressure chamber/chambers is/are formed integrally with the teeth receiving portion.

7. The orthodontic device of any preceding claim wherein the pressure sensing arrangement further comprises a temperature sensor for monitoring temperature inside a user's mouth, wherein the pressure sensing arrangement is configured to:
obtain pressure readings from the pressure sensor;
obtain temperature readings from the temperature sensor;
adjust the pressure readings based on temperature readings, to obtain adjusted pressure readings; and
output the adjusted pressure readings and the temperature readings.

8. The orthodontic device of any preceding claim wherein the wireless communication and power transfer arrangement is configured to receive power via inductive coupling, and preferably wherein the wireless communication and power transfer arrangement is a near field communication (NFC) wireless communication and power transfer arrangement.

9. A system for tracking orthodontic treatment progress, the system comprising: an orthodontic device (1) according to any of claims 1 to 8; and
a remote power device (303) configured to:
wirelessly transfer power to the orthodontic device, via the wireless communication and power transfer arrangement (11), to trigger the pressure sensor (9) to make a pressure measurement; and
receive the output pressure signal from the pressure sensor.

10. The system of claim 9, wherein the remote power device comprises a processor configured to:
determine a pressure data associated with a first measurement period, based on an output pressure signal corresponding to the first measurement period;
determine pressure data for a second measurement period, based on an output pressure signal corresponding to the second measurement period; and
determine a pressure gradient based on the pressure data for the first measurement period and the pressure data for the second measurement period.

11. The system of claim 9 or claim 10 wherein the processor is configured to:
receive environmental data corresponding to the first measurement period and/or the second measurement period; and
adjust the pressure data based on the environmental data corresponding to the same measurement period as the pressure data.

12. The system of claim 10, wherein the remote power device is configured to receive pressure data from the orthodontic device and to process the pressure data to obtain heart rate information.

13. The system of any of claims 9 to 12 wherein the remote power device is configured to initiate a read-out by transferring power to the orthodontic device via the wireless communication and power transfer arrangement and the orthodontic device is configured to, in response to receiving power via the wireless communication and power transfer arrangement, sense pressure via the pressure sensing arrangement and output a signal indicating the sensed pressure to the remote power device.

14. The system of any of claims 9 to 13 wherein the remote power device is a mobile telephone.

15. A method of manufacturing an orthodontic device (1) according to any of claims 1-8 comprising:
generating a mold based on a representation of a user's teeth, the pressure sensing arrangement comprising a pressure chamber (7);
molding an orthodontic device, in which the mouthpiece body (2) and the pressure chamber are integrated, using the mold;
coupling a pressure sensor (9) to the pressure chamber; and
coupling a first antenna (13) to the mouthpiece body.

## Patentansprüche

1. Kieferorthopädische Vorrichtung (1) zum Verändern oder Aufrechterhalten der Position der Zähne eines Benutzers, wobei die kieferorthopädische Vorrichtung Folgendes umfasst:
ein Mundstückgehäuse (2) umfassend:
einen Zahnaufnahmeabschnitt (5);
eine Druckmessanordnung, die eine mit dem Zahnaufnahmeabschnitt verbundene, Flüssigkeit enthaltende Druckkammer (7) und einen Drucksensor (9) umfasst, der so ausgebildet ist, dass er ein Ausgangsdrucksignal erzeugt, das den Flüssigkeitsdruck innerhalb der Druckkammer anzeigt; und
eine drahtlose Kommunikations- und Stromübertragungsanordnung (11) umfassend eine Antenne (13), wobei die drahtlose Kommunikations- und Stromübertragungsanordnung für Folgendes ausgebildet ist:
drahtloses Zuführen von Strom zu dem Drucksensor; und
drahtloses Senden des Ausgangsdrucksignals von der Druckmessanordnung.

2. Kieferorthopädische Vorrichtung nach Anspruch 1, wobei die Druckmessanordnung eine einzelne Druckkammer und einen Drucksensor umfasst, der so angeordnet ist, dass er einen mit der Druckkammer verbundenen Druck misst.

3. Kieferorthopädische Vorrichtung nach Anspruch 1, wobei die Druckmessanordnung eine erste Druckkammer und eine zweite Druckkammer umfasst, wobei sowohl die erste Druckkammer als auch die zweite Druckkammer in Fluidverbindung mit einem Drucksensorengehäuse stehen, und wobei mindestens ein Ventil vorhanden ist, das betriebsfähig ist, um den Drucksensor entweder mit der ersten Druckkammer oder mit der zweiten Druckkammer in Fluidverbindung zu bringen.

4. Kieferorthopädische Vorrichtung nach einem vorstehenden Anspruch, wobei der Zahnaufnahmeabschnitt einen vorderen Abschnitt zur Aufnahme von Zähnen im vorderen Bereich des Mundes eines Benutzers, einen ersten hinteren Abschnitt zur Aufnahme von Zähnen im ersten hinteren Bereich des Mundes eines Benutzers und einen zweiten hinteren Abschnitt zur Aufnahme von Zähnen im zweiten hinteren Bereich des Mundes eines Benutzers umfasst, und wobei der Drucksensor und die Antenne entweder im ersten hinteren Abschnitt oder im zweiten hinteren Abschnitt des Zahnaufnahmeabschnitts angeordnet sind.

5. Kieferorthopädische Vorrichtung nach einem vorstehenden Anspruch, wobei der Zahnaufnahmeabschnitt und die Druckkammer aus dem gleichen Material gebildet sind.

6. Kieferorthopädische Vorrichtung nach einem vorstehenden Anspruch, wobei die Druckkammer/n einstückig mit dem Zahnaufnahmeabschnitt gebildet ist/sind.

7. Kieferorthopädische Vorrichtung nach einem vorstehenden Anspruch, wobei die Druckmessanordnung weiter einen Temperatursensor zum Überwachen der Temperatur im Mund eines Benutzers umfasst, wobei die Druckmessanordnung für Folgendes ausgebildet ist:
Erhalten von Druckmesswerten vom Drucksensor;
Erhalten von Temperaturmesswerten vom Temperatursensor;
Anpassen der Druckmesswerte basierend auf den Temperaturmesswerten, um angepasste Druckmesswerte zu erhalten; und
Ausgeben der angepassten Druckmesswerte und der Temperaturmesswerte.

8. Kieferorthopädische Vorrichtung nach einem vorstehenden Anspruch, wobei die drahtlose Kommunikations- und Stromübertragungsanordnung so ausgebildet ist, dass sie Strom über induktive Kopplung empfängt, und wobei die drahtlose Kommunikations- und Stromübertragungsanordnung vorzugsweise eine drahtlose Kommunikations- und Stromübertragungsanordnung für Nahfeldkommunikation (NFC) ist.

9. System zum Verfolgen des Fortschritts einer kieferorthopädischen Behandlung, wobei das System Folgendes umfasst: eine kieferorthopädische Vorrichtung (1) nach einem der Ansprüche 1 bis 8; und
eine ferngesteuerte Leistungsvorrichtung (303), die für Folgendes ausgebildet ist:
drahtloses Übertragen von Strom an die kieferorthopädische Vorrichtung über die drahtlose Kommunikations- und Stromübertragungsanordnung (11), um den Drucksensor (9) zur Durchführung einer Druckmessung auszulösen; und
Empfangen des Ausgangsdrucksignals vom Drucksensor.

10. System nach Anspruch 9, wobei die ferngesteuerte Stromversorgungsvorrichtung einen Prozessor umfasst, der für Folgendes ausgebildet ist:
Bestimmen von Druckdaten, die mit einem ersten Messzeitraum assoziiert sind, basierend auf einem Ausgangsdrucksignal, das dem ersten Messzeitraum entspricht;
Bestimmen von Druckdaten für einen zweiten Messzeitraum, basierend auf einem Ausgangsdrucksignal, das dem zweiten Messzeitraum entspricht; und
Bestimmen eines Druckgradienten basierend auf den Druckdaten für den ersten Messzeitraum und den Druckdaten für den zweiten Messzeitraum.

11. System nach Anspruch 9 oder Anspruch 10, wobei der Prozessor für Folgendes ausgebildet ist:
Empfangen von Umgebungsdaten, die dem ersten Messzeitraum und/oder dem zweiten Messzeitraum entsprechen; und
Anpassen der Druckdaten basierend auf den Umgebungsdaten, die dem gleichen Messzeitraum wie die Druckdaten entsprechen.

12. System nach Anspruch 10, wobei die ferngesteuerte Stromversorgungsvorrichtung so ausgebildet ist, dass sie Druckdaten von der kieferorthopädischen Vorrichtung empfängt und die Druckdaten verarbeitet, um Herzfrequenzinformationen zu erhalten.

13. System nach einem der Ansprüche 9 bis 12, wobei die ferngesteuerte Stromversorgungsvorrichtung so ausgebildet ist, dass sie einen Lesevorgang durch Übertragung von Strom an die kieferorthopädische Vorrichtung über die drahtlose Kommunikations- und Stromübertragungsanordnung initiiert, und die kieferorthopädische Vorrichtung so ausgebildet ist, dass sie als Reaktion auf den Empfang von Strom über die drahtlose Kommunikations- und Stromübertragungsanordnung den Druck über die Druckmessanordnung misst und ein Signal ausgibt, das den gemessenen Druck an die ferngesteuerte Stromversorgungsvorrichtung anzeigt.

14. System nach einem der Ansprüche 9 bis 13, wobei die ferngesteuerte Stromversorgungsvorrichtung ein Mobiltelefon ist.

15. Verfahren zur Herstellung einer kieferorthopädischen Vorrichtung (1) nach einem der Ansprüche 1-8, umfassend:
Erzeugen einer Form basierend auf einer Darstellung der Zähne eines Benutzers, wobei die Druckmessanordnung eine Druckkammer (7) umfasst;
Formen einer kieferorthopädischen Vorrichtung, in der der Mundstückkörper (2) und die Druckkammer integriert sind, unter Verwendung der Form;
Koppeln eines Drucksensors (9) mit der Druckkammer; und
Koppeln einer ersten Antenne (13) mit dem Mundstückkörper.

## Revendications

1. Dispositif orthodontique (1) destiné à modifier ou à maintenir la position des dents d'un utilisateur, ce dispositif orthodontique comprenant:
un corps d'embout buccal (2) comprenant :
une portion recevant les dents (5) ;
un dispositif de détection de pression comprenant une chambre de pression (7) contenant un fluide, couplée à la partie recevant les dents, et un capteur de pression (9) configuré pour générer un signal de pression de sortie indiquant la pression du fluide à l'intérieur de la chambre de pression ; et
un dispositif de communication sans fil et de transfert d'énergie (11) comprenant une antenne (13), le dispositif de communication sans fil et de transfert d'énergie étant configuré pour :
alimenter sans fil le capteur de pression ; et
transmettre sans fil le signal de pression de sortie du dispositif de détection de pression.

2. Dispositif orthodontique selon la revendication 1, dans lequel le dispositif de détection de pression comprend une seule chambre de pression et un capteur de pression disposé pour mesurer une pression associée à la chambre de pression.

3. Dispositif orthodontique selon la revendication 1, dans lequel le dispositif de détection de pression comprend une première chambre de pression et une seconde chambre de pression, chacune de la première chambre de pression et de la seconde chambre de pression étant couplée fluidiquement à un boîtier de capteur de pression, et au moins une vanne actionnable pour coupler fluidiquement le capteur de pression soit à la première chambre de pression, soit à la seconde chambre de pression.

4. Dispositif orthodontique selon une quelconque revendication précédente, dans lequel la partie recevant les dents comprend une section avant destinée à recevoir les dents à l'avant de la bouche de l'utilisateur, une première section arrière destinée à recevoir les dents sur un premier côté arrière de la bouche de l'utilisateur et une seconde section arrière destinée à recevoir les dents à un second côté arrière de la bouche de l'utilisateur, et dans lequel le capteur de pression et l'antenne sont tous deux disposés soit dans la première section arrière, soit dans la seconde section arrière de la partie recevant les dents.

5. Dispositif orthodontique selon une quelconque revendication précédente, dans lequel la partie recevant les dents et la chambre de pression sont formées du même matériau.

6. Dispositif orthodontique selon une quelconque revendication précédente, dans lequel la/les chambre(s) de pression est/sont formée(s) d'un seule tenant avec la partie recevant les dents.

7. Dispositif orthodontique selon une quelconque revendication précédente, dans lequel le dispositif de détection de pression comprend en outre un capteur de température pour surveiller la température à l'intérieur de la bouche de l'utilisateur, dans lequel ledit dispositif de détection de pression est configuré pour :
obtenir les relevés de pression du capteur de pression ;
obtenir les relevés de température du capteur de température ;
ajuster les relevés de pression en fonction des relevés de température, afin d'obtenir des relevés de pression ajustés ; et
émettre les relevés de pression ajustés et les relevés de température.

8. Dispositif orthodontique selon une quelconque revendication précédente, dans lequel le système de communication sans fil et de transfert d'énergie est configuré pour recevoir de l'énergie par couplage inductif, et de préférence dans lequel le système de communication sans fil et de transfert d'énergie est un système de communication sans fil et de transfert d'énergie à champ proche (NFC).

9. Système de suivi de l'évolution d'un traitement orthodontique, le système comprenant : un dispositif orthodontique (1) selon l'une quelconque des revendications 1 à 8 ; et
un dispositif d'alimentation à distance (303) configuré pour :
transférer sans fil l'énergie au dispositif orthodontique, via le dispositif de communication et de transfert d'énergie sans fil (11), afin de déclencher le capteur de pression (9) pour effectuer une mesure de pression ; et
recevoir le signal de pression de sortie du capteur de pression.

10. Système selon la revendication 9, dans lequel le dispositif d'alimentation à distance comprend un processeur configuré pour :
déterminer des données de pression associées à une première période de mesure, sur la base d'un signal de pression de sortie correspondant à la première période de mesure ;
déterminer les données de pression pour une seconde période de mesure, à partir d'un signal de pression de sortie correspondant à cette seconde période de mesure ; et
déterminer un gradient de pression à partir des données de pression de la première période de mesure et des données de pression de la seconde période de mesure.

11. Système selon la revendication 9 ou la revendication 10, dans lequel le processeur est configuré pour :
recevoir des données environnementales correspondant à la première période de mesure et/ou la seconde période de mesure ; et
ajuster les données de pression en fonction des données environnementales correspondant à la même période de mesure que les données de pression.

12. Système selon la revendication 10, dans lequel le dispositif d'alimentation à distance est configuré pour recevoir des données de pression provenant du dispositif orthodontique et pour traiter les données de pression afin d'obtenir des informations sur la fréquence cardiaque.

13. Système selon l'une quelconque des revendications 9 à 12, dans lequel le dispositif d'alimentation à distance est configuré pour initier une lecture en transférant de l'énergie au dispositif orthodontique via le dispositif de communication sans fil et de transfert d'énergie, et le dispositif orthodontique est configuré pour, en réponse à la réception d'énergie via le dispositif de communication sans fil et de transfert d'énergie, détecter la pression via le dispositif de détection de pression et émettre un signal indiquant la pression détectée au dispositif d'alimentation à distance.

14. Système selon l'une quelconque des revendications 9 à 13 dans lequel le dispositif d'alimentation à distance est un téléphone mobile.

15. Procédé de fabrication d'un dispositif orthodontique (1) selon l'une quelconque des revendications 1-8, comprenant :
la génération d'un moule basé sur une représentation des dents d'un utilisateur, le dispositif de détection de pression comprenant une chambre de pression (7) ;
le moulage d'un dispositif orthodontique, dans lequel le corps de l'embout buccal (2) et la chambre de pression sont intégrés, à l'aide du moule ;
le raccordement d'un capteur de pression (9) à la chambre de pression ; et
le couplage d'une première antenne (13) au corps de l'embout buccal.
